# EUROPÄISCHE PATENTSCHRIFT

(11) **EP 1 887 035 B1**
(45) Veröffentlichungstag und Bekanntmachung des Hinweises auf die Patenterteilung: **11.11.2009**
(21) Anmeldenummer: 07015235.0
(22) Anmeldetag: 03.08.2007
(51) Int. Cl.: C08L 1/26, B44C 3/04

(54) **Formbare Masse sowie deren Verwendung**
Mouldable mass and its use
Masse déformable et son utilisation

(30) Priorität: 08.08.2006 DE 102006036993
(43) Veröffentlichungstag der Anmeldung: 13.02.2008
(73) Patentinhaber: J.S. Staedtler GmbH & Co KG, 90427 Nürnberg (DE)
(72) Erfinder: Schnorrer, Heinrich, 92421 Schwandorf (DE)

(56) Entgegenhaltungen:
- EP-A- 1 529 805
- DE-A1- 3 000 837
- DE-A1- 10 136 450
- DE-A1-102004 039 270
- DE-B1- 2 937 843
- JP-A- 2005 281 643
- US-A- 5 736 209
- US-A- 5 873 933

## Beschreibung

Die Erfindung betrifft eine formbare Masse gemäß dem Hauptanspruch sowie deren Verwendung.

Bei der erfindungsgemäßen Masse handelt es sich um eine lufttrocknende formbare Masse, die zur beschleunigenden Verfestigung bzw. Aushärtung in Wärmeöfen eingebracht werden kann oder alternativ mittels Strahlen als Energiequellen gehärtet werden kann.

Aus der DE 10 2004 039 270 A1 ist eine formbare Masse bekannt, die durch Zuführung von Energie aus Energiequellen getrocknet und ausgehärtet wird, wobei die Energiequelle zur Härtung der Masse ein Mikrowellengerät ist.
Die beschriebene Masse weist mindestens eine Komponente mit einer hohen Porösität auf. Diese Komponente ist ein anorganischer Bestandteil, wie Kalkhydrat, Perlit und Bentonit.
Nachteilig ist es bei einer derartigen Masse, dass die Oberflächenqualität nach der Trocknung schlecht ist, d.h. uneben und rau ausgebildet ist. Dies liegt zum Teil auch daran, dass die noch nicht ausgehärtete Masse bereits beim Glattstrich Unebenheiten an der modellierten Oberfläche aufweist.

Weiter sind lufttrocknende und ofenhärtende plastische Massen bekannt.
Nachteilig bei derartigen Massen ist es, dass selbst bei kleinen Modellen eine Trocknung und Aushärtung bei Raumtemperatur bis zur vollständigen Trocknung oder Verfestigung mindestens 24 Stunden Zeit benötigt. Bei größeren Teilen kann die Trocknung sogar mehrere Tage beanspruchen. Bei derartigen Massen hat sich gezeigt, dass selbst bei beschleunigender Trocknung im Backofen eine Aushärtedauer von mehreren Stunden erforderlich ist.
Versuche, derartige wasserbasierende formbare Massen in der Mikrowelle zu Trocknen bzw. Auszuhärten, haben zu dem Ergebnis geführt, dass die Masse zuerst an ihrer Oberfläche aushärtet, was zur Folge hat, dass kein Wasserdampf vom Inneren des Modells nach außen diffundieren kann. Durch den Wasserdampfdruck im Inneren des Modells, kommt es zu Rissen bzw. Blasen an der Oberfläche der Modelle, was die Modelle unansehnlich und instabil werden lässt. Im Exremfall kann der Wasserdampfdruck das Modell zersprengen.

Ein weiterer Nachteil ist, dass die mit derartigen Massen hergestellten Modelle bei Lufttrocknung oder Backofentrocknung linear mindestens 4 - 10 % schrumpfen. Weiter hat sich gezeigt, dass dünner ausgebildete Modelle, mit Schichtdicken bis zu 5 mm, während der Trocknung stark zum verziehen neigen.

**Aufgabe** der vorliegenden Erfindung ist es daher eine formbare Masse auf Wasserbasis zu schaffen, die die genannten Nachteile nicht aufweist, wobei sich damit hergestellte Modelle in wenigen Minuten vollständig trocknen und aushärten lassen, ohne dass sich dabei Risse oder Blasen ausbilden und zudem eine hohe Oberflächengüte gewährleistet ist.

Diese Aufgabe wird mit den kennzeichnenden Merkmalen des Anspruchs 1 auf einfache Weise gelöst.
Bevorzugte Ausführungen, Weiterbildungen und Verwendung derartiger Massen sind in den Unter- und Nebenansprüchen umfasst.

Die erfindungsgemäßen Massen setzen sich mindestens aus Wasser, Bindemittel, Füllstoff und Salz, sowie ggf. Zusatzstoffen wie Konservierungsmittel, Verdunstungsverzögerer und Farbmitteln zusammen.

Die Aufgabe an die Masse wird dadurch gelöst, indem die Masse ein Celluloseether, Methylhydroxyethylcellulose (MHEC) oder Methylhydroxypropylcellulose (MHPC) mit einem hohen Veretherungsgrad beinhaltet. Der Veretherungsgrad wird mit einer sogenannten DS-Zahl angegeben. DS heißt hierbei Durchschnittsubstitutionsgrad . Er gibt die durchschnittliche Anzahl der veretherten Hydroxylgruppen einer Anhydroglucoseeinheit der Cellulose an. Der DS kann maximal 3 betragen. Celluloseether mit DS größer 1,5 werden als hochverethert bezeichnet.

Der Anteil an Celluloseether in der Masse flockt in der Wärme aus, wodurch verhindert wird, dass sich beim Trocknen in der Mikrowelle an der Oberfläche der Masse eine geschlossene Schicht ausbildet und der Wasserdampf nicht aus dem Inneren der Modelliermasse durch Mikrokanäle nach außen entweichen kann. Der Vorgang des Ausflockens beginnt ab etwa 40°C, in Abhängigkeit vom Durchschnittsubstitutionsgrad DS. Auf diese Weise kommt es nicht zur Blasen- und Rissbildung an der Oberfläche infolge des Wasserdampfdruckes. Beim Ausflocken spricht man von einer sogenannten Thermogelierung.

Aus der DE 29 37 843 B1 ist eine Masse zum Kneten und Modellieren bekannt, welche Celluloseether beinhaltet.
Nachteilig ist bei einer derartigen Masse, dass im Falle einer Härtung innerhalb von Minuten unter Energieeinbringung, der modellierte Gegenstand zerstört werden würde.

Auch US-A-5 873 933, eine dauerelastische Knetmasse für Kinder beschreibend, weist einen Anteil an Cellulosen auf. Eine derartige Masse ist nicht für eine minutenschnelle Durchhärtung entwickelt und würde bei eine Härtung beispielsweise durch Energieeinbringung mittels Mikrowelle zum bersten der Modellgegenstände führen.

DE 30 00 837 A1 beschreibt ein Mittel zur Herstellung eines Teiges, welches Celluloseether aufweist, jedoch zum aushärten in wenigen Minuten nicht geeignet ist. Bei schneller Härtung bzw. Trocknen der Masse bildet sich an der Oberfläche von Modellen die aus derartigen Massen bestehen eine geschlossene, dampfundurchlässige Schicht aus, wodurch sich bei schneller Trocknung im Inneren ein hoher Druck ausbildet, was schlussendlich zur Zerstörung der Modelle führt.

Unterstützt wird die Thermogelierung durch den Zusatz von Salzen, wie z.B.,Calciumchlorid. Bevorzugt werden Salze einwertiger Kationen, wie beispielsweise Natriumchlorid eingesetzt.

Anhand einiger Ausführungsbeispiele wird die Erfindung nachfolgend näher beschrieben.

### Rahmenbeispiel für eine formbare Masse:

| | |
|---|---|
| Wasser | 5,0 - 65 Gew. % |
| Celluloseether (BM1) | 0,1 - 25 Gew. % |
| Füllstoffe | 0,5 - 35 Gew. % |
| Salz | 0,1 - 10 Gew. % |
| Kunststoffdispersion (BM2) | 0 - 40 Gew. % |
| Farbmittel | 0 - 10 Gew. % |
| Konservierungsmittel (KM) | 0 - 2 Gew. % |
| Verdunstungsverzögerer (VZ) | 0 - 10 Gew. % |

### Beispiel 1: Modelliermasse terracotta

| | |
|---|---|
| Wasser 56,4 Gew.% | |
| Methylhydroxyethylcellulose (BM1) | 8,0 Gew.% |
| Polyacrylat (trockengewicht von BM2) | 9,0 Gew.% |
| Mikroglashohlkugeln | 19,0 Gew.% |
| Natriumchlorid | 2,0 Gew.% |
| Paraffinöl (VZ) | 5,0 Gew.% |
| Pigment Red 101 | 0,5 Gew.% |
| 2-Brom-2-nitropropan-1,3-diol (KM) | 0,1 Gew.% |

### Beispiel 2: Modelliermasse weiß

| | |
|---|---|
| Wasser | 64,0 Gew.% |
| Methylhydroxyethylcellulose (BM1) | 9,0 Gew.% |
| Mikroglashohlkugeln | 22,0 Gew.% |
| Calciumchlorid | 2,0 Gew.% |
| Glycerin (VZ) | 2,8 Gew.% |
| Sorbinsäure (KM) | 0,2 Gew.% |

Das Wasser in der Masse kann rein als Wasser zugegeben werden oder aus der zugegebenen Kunststoffdispersion, dem Bindemittel (BM2) stammen. Im Beispiel 1 wurde zum Beispiel 18 Gew. % einer 50%igen Kunststoffdispersion zugegeben, was einem Trockengehalt an Kunststoff von 9 Gew. % entspricht

Als **Füllstoffe** werden bevorzugt sphärische, bzw. kugelförmige anorganische Materialien eingesetzt. Ein Beispiel hierfür sind Mikroglashohlkugeln mit einer Teilchengröße kleiner 150 µm.

Die mit der erfindungsgemäßen Masse hergestellten Modelle oder Objekte in ein handelübliches Mikrowellengerät eingebracht werden und von der dort erzeugten Strahlung in minutenschnelle getrocknet und ausgehärtet werden.

Es hat sich weiter als vorteilhaft herausgestellt, dass Knetmassen, welche zusätzlich **synthetische organische Bindemittel (BM2)** aufweisen, eine noch bessere Plastizität oder Knetfähigkeit aufweisen. Als zweites Bindemittel können synthetische organische Bindemittel eingesetzt werden, wie beispielsweise Polyurethane und/oder Polyacrylate, die wasserlöslich, wasserunlöslich oder wasserdispergierbar sind. Bevorzugt werden diese synthetischen Bindemittel als wässrige Dispersion eingesetzt.
Es hat sich gezeigt, dass Massen, die BM2 beinhalten, im gehärteten Zustand eine höhere Bruchfestigkeit und höhere Biegeelastizität aufweisen.

Weiter als vorteilhaft herausgestellt, dass die Modelliermasse nach dem Aushärten in der Mikrowelle, eine wesentlich geringere Dichte als im ungehärteten Zustand aufweist. Dies führt dazu, dass die Modelle nach dem Härten leichter werden und sogar schwimmfähig sind. Die Dichte der Masse im ungehärteten Zustand beträgt ungefähr 1,05 bis 1,5 g/ml und die Dichte der ausgehärteten Modelle beträgt ungefähr 0,70 bis 0,95 g/ml.

Bei Trocknung von Objekten und Gegenständen, hergestellt mit der erfindungsgemäßen Masse, welche BM1 und BM2 aufweisen, in einer Mikrowelle, konnten extrem kurze Aushärtezeiten erreicht werden.

Nun hat es sich gezeigt, dass über die Zugabe von **verdunstungshemmende Mitteln,** wie beispielsweise Glycerine, Paraffinöl, zuckerhaltige Stoffe und/oder Glycole, die Abbindegeschwindigkeit der erfindungsgemäßen Masse reguliert bzw. eingestellt werden kann.

Als weiteren Zusatz kann die erfindungsgemäße Masse auch pH-Regulatoren aufweisen. Ein Beispiel hierfür wäre Kaliumalaun.

Der besondere Vorteil einer Härtung mittels Mikrowellenstrahlung ist beispielhaft in nachfolgender Tabelle aufgezeigt.

| **Ausgangsmasse (Gramm)** | **Kugeldurchmesser (cm)** | **Leistung (Watt)** | **Aushärtezeit (min)** | **Endgewicht (Gramm)** |
|---|---|---|---|---|
| **20** | **3** | **400** | **6** | **13** |
| **20** | **3** | **800** | **3** | **13** |
| **40** | **4** | **800** | **4** | **26** |
| **80** | **5** | **800** | **5** | **52** |
| **160** | **6** | **800** | **8** | **104** |

Als Konservierungsmittel können, nur um einige Beispiele zu nennen, eine 0,5%ige Lösung von 2-Brom-2-nitropropan-1,3-diol oder ein 0,3 %-iges Gemisch aus 5-Chlor-2-methyl-2H-isothiazol-3-on und 2-Methyl-2H-isotrhiazol-3-on Verwendung finden.

Das der Masse ggf. zugegebene **Farbmittel** kann in Form von pulverförmigen Pigmenten oder wässrigen Pigmentpräparationen vorliegen. Stellvertretend für eine Vielzahl einsetzbarer Pigmente wurden in den Beispielen einige angeführt. Häufig wird auch Titandioxid als farbgebendes Mittel eingesetzt. Bei der Verwendung der Farbpigmente sind kaum Grenzen aufgezeigt.

Die Herstellung erfindungsgemäßer Modelliermassen kann mit üblichen Vorrichtungen, insbesondere mit herkömmlichen Mischern erfolgen. Die Komponenten werden in Mischern vermengt, geknetet und anschließend extrudiert. Danach wird die Masse luftdicht verpackt.

**Verwendung** findet eine derartige Modelliermasse im Modell- oder Prototypenbau, da Muster und Modelle oder ganze Modelllandschaften maßstabsgetreu erstellt werden können, da beim Härten keine Schrumpfung auftritt.

Weiter wird eine derartige Modelliermasse im Hobby- und Künstlerbereich eingesetzt, zur Herstellung von beispielsweise Schmückgegenständen, Puppen, Puppenköpfe, Masken und vielen weiteren Gegenständen. Der Verwendung zur Gestaltung von Modellen im Hobby- und Künstlerbedarf sind keinerlei Grenzen gesetzt.

Empfehlenswert ist die Verwendung der Modelliermasse auch in Modellierkursen für Erwachsen, Schule und Kindergärten gleichermaßen, da die im Kurs, Schule oder Kindergarten erstellten Modelle in minutenschnelle gehärtet werden können und vom Schöpfer sofort mit nach Hause mitgenommen werden können.

Eine weitere mögliche Verwendung der erfindungsgemäßen Masse als Dicht- und isolier- und Abformmasse.

## Patentansprüche

1. **Formbare Masse,** mindestens bestehend aus Wasser, Bindemittel und Füllstoff, wobei das Bindemittel ein Celluloseether ist
**dadurch gekennzeichnet,**
**dass** das Bindemittel (BM1) ein Celluloseether mit hohem Veretherungsgrad ist,
**dass** der Celluloseether einen Veretherungsgrad mit einem Durchschnittssubstitutionsgrad (DS) größer 1,5 aufweist und dass die Masse als weiteren Bestandteil Salz aufweist.

2. **Masse** nach Anspruch 1
**dadurch gekennzeichnet,**
**dass** die Masse mindestens
| | |
|---|---|
| 5 - 65 Gew. % | Wasser |
| 0,1 - 25 Gew. % | Celluloseether (BM1) |
| 0,5 - 35 Gew. % | Füllstoffe |
| 0,1 - 10 Gew. % | Salz |
aufweist.

3. **Verwendung einer formbaren Masse** nach einem der vorhergehenden Ansprüche im Modell- und/oder Prototypenbau.

4. **Verwendung einer formbaren Masse** nach einem der vorhergehenden Ansprüche als Modelliermasse im Hobby- und/oder Künstlerbereich.

5. **Verwendung einer formbaren Masse** nach einem der vorhergehenden Ansprüche als Dicht-, Isolier- und/oder Abformmasse.

6. **Verfahren zur Härtung einer formbaren Masse** nach einem der vorhergehenden Ansprüche,
**dadurch gekennzeichnet,**
**dass** die Masse mittels Mikrowellenenergie ausgehärtet wird.

## Claims

1. Mouldable material, consisting at least of water, binder and filler, wherein the binder is a cellulose ether, **characterised in that** the binder (BM1) is a cellulose ether with a high degree of etherification, that the cellulose ether has a degree of etherification with an average degree of substitution (DS) greater than 1.5 and that the material has salt as a further component.

2. Mouldable material according to claim 1, **characterised in that** the material comprises at least
| | | |
|---|---|---|
| 5 - 65 | weight % | water |
| 0.1 - 25 | weight % | cellulose ether (BM1) |
| 0.5 - 35 | weight % | fillers |
| 0.1 - 10 | weight % | salt. |

3. Use of a mouldable material according to any one of the preceding claims in model and/or prototype construction.

4. Use of a mouldable material according to any one of the preceding claims as a modelling material in the hobby and/or artistic field.

5. Use of a mouldable material according to any one of the preceding claims as a sealing, insulating and/or casting material.

6. Method of hardening a mouldable material according to any one of the preceding claims, **characterised in that** the material is hardened by means of microwave energy.

## Revendications

1. **Masse déformable,** composée au moins d'eau, d'un liant et d'une matière de remplissage, le liant étant un éther de cellulose,
**caractérisée en ce**
**que** le liant (BM1) est un éther de cellulose à haut degré d'éthérification,
**que** l'éther de cellulose présente un degré d'éthérification avec un degré de substitution moyen (DS) supérieur à 1,5
et **que** la masse présente du sel comme composant supplémentaire.

2. **Masse** selon la revendication 1,
**caractérisée en ce**
**que** la masse présente au moins
| | |
|---|---|
| 5 - 65 % en poids | d'eau |
| 0,1 - 25 % en poids | d'éther de cellulose (BM1) |
| 0,5 - 35 % en poids | de matières de remplissage |
| 0,1 - 10 % en poids | de sel. |

3. **Utilisation d'une masse déformable** selon l'une des revendications précédentes dans la construction de modèles et/ou de prototypes.

4. **Utilisation d'une masse déformable** selon l'une des revendications précédentes comme masse à modeler dans le domaine des loisirs et/ou de l'art.

5. **Utilisation d'une masse déformable** selon l'une des revendications précédentes comme masse ou pâte d'étanchéité, d'isolation et/ou de prise d'empreintes.

6. **Procédé pour durcir une masse déformable** selon l'une des revendications précédentes,
**caractérisé en ce**
**que** la masse est durcie au moyen de l'énergie de micro-ondes.
